# EUROPÄISCHE PATENTSCHRIFT

(11) **EP 2 950 641 B1**
(45) Veröffentlichungstag und Bekanntmachung des Hinweises auf die Patenterteilung: **30.11.2016**
(21) Anmeldenummer: 14706252.5
(22) Anmeldetag: 08.01.2014
(51) Int. Cl.: A01L 5/00, A01L 1/04

(54) **HUFEISEN**
HORSESHOE
FER À CHEVAL

(30) Priorität: 30.01.2013 AT 252013
(43) Veröffentlichungstag der Anmeldung: 09.12.2015
(73) Patentinhaber: König, Franz, 7561 Heiligenkreuz i. L. (AT)
(72) Erfinder: KÖNIG, Franz, A-7561 Heiligenkreuz i.L. (AT); DANNER, Rudolf, A-8280 Fürstenfeld (AT)
(74) Vertreter: Cunow, Gerda
(86) Internationale Anmeldenummer: PCT/AT2014/000001
(87) Internationale Veröffentlichungsnummer: WO 2014/117187

(56) Entgegenhaltungen:
- DE-C- 60 568
- DE-C- 92 165
- FR-A1- 2 901 959

## Beschreibung

Die vorliegende Erfindung bezieht sich auf ein Hufeisen, für Reittierhufe mit einem hufeisenförmigen, eine Laufseite und eine Hufauflageseite aufweisenden Grundkörper sowie gegebenenfalls wenigstens einen am Grundkörper festgelegten Aufzug und zwei an dem Grundkörper über Gelenkverbindungen beweglich festgelegte rückwärtige Endteile des Hufeisens, wobei der Grundkörper die Laufseite des Hufeisens ausbildet und die beweglich festgelegten Endteile Teile der Hufauflageseite ausbilden, wobei die Gelenkverbindungen in der Ebene der Hufauflageseite des Hufeisens relativ zueinander beweglich sind (siehe FR 2 901 959 A1 und DE 60 568 C).

Zum Schutz der Hufe von Reittieren vor einem übermäßigen Abnützen werden schon seit dem Altertum Hufeisen verwendet, wobei die heute überwiegend eingesetzte Form eines Hufeisens, welches auf den Huf des Reittieres genagelt ist, bereits seit dem Mittelalter im Wesentlichen unverändert im Einsatz ist.

Hufeisen existieren derzeit in unterschiedlichsten Formen, um damit bestimmte orthopädische Wirkungen zu erzielen und auch Materialien, wie beispielsweise Stahl, Eisen, Aluminium und auch Kunststoff sowie Kombinationen der zuvor genannten Materialien, um einerseits die nötige Weichheit bzw. Elastizität des Eisens bzw. Hufschutzes zur Verfügung zu stellen und andererseits eine übermäßig starke Abnutzung hintanzuhalten. Zur Verbesserung ihrer orthopädischen Wirkung bzw. um den Huf des Reittieres so weit wie möglich zu schonen, werden in neuerer Zeit Hufeisen, insbesondere ein aus Kunststoff bestehendes Hufeisen, auch auf den Reittierhuf geklebt. Jedoch auch mit einem geklebten Hufeisen kann die Elastizität zwischen Huf und Hufschutz nicht bzw. nicht wesentlich erhöht werden.

Unter einem "Hufeisen" wird hierbei jede Art von Hufschutz, der auf einen Reittierhuf angebracht werden kann, verstanden, unabhängig davon, ob er genagelt oder geklebt ist und abhängig von dem Material, aus welchem er ausgebildet ist.

Zur Erhöhung der Flexibilität des Hufeisens wurden gemäß der DE 33 40 095 in eine Kunststoffschale Metallteile, welche aneinander angelegt eine Hufeisenform ergeben, eingelegt und diese Metallteile in den hufeisenförmigen, elastomeren Ring einvulkanisiert. Hierbei wurden entweder die Teile einander überlappend oder aneinander anliegend ausgebildet, wobei in den Überlappungsbereichen keinerlei weitere Verbindung vorgesehen wurde, so dass aufgrund des Vorsehens des Kunststoffs eine gewisse Beweglichkeit erzielbar ist.

Aus der US 6,076,607 ist ein Hufeisen bekannt geworden, bei welchem in dem Zehenbereich bzw. vorderen Endbereich des Hufeisens Einsatzteile eingesetzt wurden, wodurch eine mehr oder weniger große Flexibilität erreicht wurde. Das Einsetzen dieser Teile erfolgte durch Einsetzen von Haltestiften bzw. Halteschrauben von außen.

Eine ähnliche Variante einer Erhöhung der Flexibilität des Hufeisens ist der FR-A 483.953 entnehmbar, in welcher im Zehenbereich eine Gelenkverbindung mittels eines Niets oder einer Art Kugelgelenk vorgesehen wurde, um die zwei Schenkel eines Hufeisens gegeneinander beweglich zu gestalten.

Eine ähnliche Lösung ist auch der DE-C 4233 entnehmbar, in welcher im Zehenbereich Gelenke vorgesehen wurden, um die Schenkel des Hufeisens zumindest in einem geringen Ausmaß beweglich zu gestalten.

Schließlich beschreibt die DE 297 18 933 U1 ein Hufeisen, welches die Bewegung des Hufes beim Gehen mitverfolgen soll, wobei auch hier im Zehenbereich eine Gelenkverbindung vorgesehen ist, welche eine Bewegung der zwei Schenkel des Hufeisens zueinander ermöglichen soll.

Insbesondere bei vollständig aus Metall gefertigten Beschlägen gelingt es jedoch nicht, die gewünschte Elastizität des Hufeisens, insbesondere in Kombination mit dem sich beim Auffußen des Tieres merkbar bewegenden Huf in Übereinstimmung zu bringen, so dass sämtliche bis dato zum Einsatz gelangenden Hufeisen entweder an dem Mangel leiden, dass sie eine zu geringe Elastizität aufweisen oder an dem Mangel leiden, dass sie sich übermäßig stark und rasch abnutzen, wodurch neben relativ hohen Kosten für den Beschlag per se auch ein relativ häufiges Beschlagen bzw. neues Festkleben der Hufeisen an den Reittierhufen erforderlich ist, was wiederum für den Reittierhuf selbst nicht günstig ist.

Die vorliegende Erfindung zielt nun darauf ab, einen Hufschutz, insbesondere ein Hufeisen für Reittierhufe zur Verfügung zu stellen, mit welchem es einerseits gelingt einen dauerhaften und relativ abnutzungsresistenten Beschlag zu erzielen und andererseits die für eine gesunde Bewegung des Reittierhufes erforderliche nötige Elastizität zur Verfügung zu stellen.

Zur Lösung dieser Aufgabe ist das erfindungsgemäße Hufeisen im Wesentlichen dadurch gekennzeichnet, dass die rückwärtigen Endteile über Gelenkverbindungen in der Ebene der Hufauflageseite des Hufeisens relativ zueinander beweglich sind, und dass die Gelenkverbindungen an einer Außenseite des Hufeisens von einem eine Rückstellkraft auf die beweglichen Endteile ausübenden Element übergriffen sind. Dadurch, dass die rückwärtigen Enteile über Gelenkverbindungen in der Ebene der Hufauflageseite des Hufeisens relativ zueinander beweglich sind, können die beweglich festgelegten rückwärtigen Endteile des Hufeisens der Bewegung des Hufes insbesondere beim Auffußen des Reittieres folgen, bei welcher Bewegung der Huf des Reittieres im Bereich der Trachten auseinandergedrückt wird und somit breiter wird, sodass die beweglich festgelegten rückwärtigen Endteile nach Außen bewegt werden.

Wenn das Reittier seinen Huf wiederum entlastet, wird durch das Vorsehen des eine Rückstellkraft auf die beweglichen Endteile ausübenden Elementes sichergestellt, dass die beweglich an dem Grundkörper festgelegten rückwärtigen Endteile wieder in ihre Ruheposition bzw. Ausgangsposition zurückgeführt werden. Mit einer derartigen Anordnung gelingt es somit, bei jedem Schritt des Reittieres dem Hufeisen die Möglichkeit zu geben, den natürlich stattfindenden Bewegungen, nämlich d.h. der Verbreiterung des Hufes im Bereich der Trachten beim Auffußen und wiederum seiner Verschmälerung beim Abfußen sicher und zuverlässig zu folgen.

Um weiterhin sicherzustellen, dass die eine Rückstellkraft ausübenden Elemente eine sichere Rückführung der beweglich festgelegten rückwärtigen Endteile gewährleisten, ist die Erfindung bevorzugt so weitergebildet, dass die eine Rückstellkraft ausübenden Elemente aus Federelementen oder Dämpfungselementen gewählt sind. Derartige Elemente können bei korrekter Anordnung die beweglich festgelegten rückwärtigen Endteile mit Druck beaufschlagen und somit, wenn der größere Druck des Hufes des Reittieres auf die beweglich festgelegten rückwärtigen Endteile nachlässt, diese wieder in ihrer Ursprungsposition zurückführen.

Gemäß einer bevorzugten Weiterbildung sind die eine Rückstellkraft ausübenden Elemente aus Blattfedern gebildet.

Blattfedern können hierbei insbesondere an der Außenseite des Hufeisens sicher und zuverlässig angeordnet werden und bewirken keine Verbreiterung bzw. höchstens eine minimale Verbreiterung des Hufeisens, sodass eine Verletzung des Reittieres bei Benutzung des Hufeisens mit Sicherheit ausgeschlossen ist und überdies ein unbeabsichtigtes Zerstören der Blattfedern bzw. des eine Rückstellkraft ausbildenden Elements durch ein Drauftreten des Reittieres hintangehalten ist.

In dem, wie dies einer bevorzugten Weiterbildung entspricht, die Blattfedern mit wenigstens dem Grundkörper und/oder den beweglich festgelegten Endteilen lösbar verbunden sind, können unterschiedliche Blattfedern an ein und demselben Hufeisen festgelegt werden, um eine größere oder geringere Rückstellkraft auf die beweglich festgelegten Endteile auszuüben. Hierbei ist es dem Fachmann, beispielsweise dem Hufschmied, überlassen, die passende Blattfeder auszuwählen und in das Hufeisen einzusetzen. Auch gelingt es mit einer derartigen Ausbildung, beispielsweise zerstörte Blattfedern, jederzeit ohne, dass es erforderlich wäre, das Reittier neu zu beschlagen zu ersetzen.

Gemäß einer Weiterbildung der Erfindung ist das Hufeisen so ausgebildet, dass die Blattfedern in zumindest im Grundkörper ausgebildeten Sacklöchern lösbar festlegbar sind. Durch die Festlegung der Blattfedern in Sacklöchern des Grundkörpers wird einerseits eine übermäßige Verbreiterung des Hufeisens nach außen vermieden und überdies ein sicherer und zuverlässiger Halt der Blattfedern in dem Hufeisen gewährleistet.

Gemäß einer anderen Weiterbildung der Erfindung ist das Hufeisen bevorzugt so ausgebildet, dass die Blattfedern mit den beweglich festgelegten rückwärtigen Endteilen unlösbar verbunden sind. Bei einer derartigen Ausbildung ist gewährleistet, dass die Blattfedern unverlierbar an dem Hufeisen festgelegt sind und dass das Hufeisen beispielsweise heiß bearbeitet werden kann, um es an den jeweiligen Reittierhuf anzupassen. Nach einer Heißbearbeitung des Hufeisens ist es in diesem Fall lediglich erforderlich, das freie Ende der Blattfedern mit dem Grundkörper lösbar zu verbinden, um ein vollständig funktionsfähiges Hufeisen zur Verfügung zu haben.

Allen Ausbildungen des Hufeisens mit Blattfedern ist gemeinsam, dass die Blattfeder hierbei entweder außen am Hufeisen geführt sein kann oder in eine Vertiefung bzw. Nut des Hauptkörpers oder des beweglichen Teils des Hufeisens eingelegt sein, wodurch jegliche Verletzung des Reittiers mit Sicherheit hintangehalten ist.

Gemäß einer anderen Ausbildung der Erfindung ist das Hufeisen so ausgebildet, dass das Hufeisen an seiner Außenseite wenigstens teilweise von wenigstens einem eine Rückstellkraft ausübenden elastischen Kunststoffband umgeben ist. In dem das Hufeisen an seiner Außenseite wenigstens teilweise von wenigstens einem eine Rückstellkraft ausübenden elastischen Kunststoffband umgeben ist, wird derselbe Effekt wie mit den oben beschriebenen Blattfedern erzielt. Es gelingt jederzeit nach einem Abfußen des Reittieres einen ausreichenden Druck auf die beweglich festgelegten rückwärtigen Endteile auszuüben, um diese wieder in ihre Grundposition zurückzuführen. Bei einem neuerlichen Auffußen des Reittieres werden die beweglich festgelegten rückwärtigen Endteile wiederum über die Außenkontur des Hufeisens hinausgedrückt und verformen hierbei das elastische Kunststoffband in Richtung nach außen.

Eine derartige Ausbildung hat überdies den Vorteil, dass das Hufeisen außen immer glatt ist und somit eine Verletzungsgefahr für die Reittiere deutlich reduziert ist.

Eine besonders einfache Festlegung des Kunststoffbandes an dem Hufeisen gelingt gemäß der Erfindung dadurch, dass die Enden des wenigstens einen elastischen Kunststoffbandes in Ausnehmungen, insbesondere an der Innenseite des Hufeisens festgelegt, insbesondere eingehakt sind. In dem die Enden des wenigstens einen elastischen Kunststoffbandes in Ausnehmungen, insbesondere an der Innenseite des Hufeisens festgelegt und eingehakt sind, kann ein Hufeisen in herkömmlicher Weise bearbeitet und auf einen Reittierhuf genagelt werden und nach einer Festlegung des Hufeisens durch den Hufschmied weiterhin das elastische Kunststoffband um das Hufeisen geführt werden. In gleicher Weise könnte das Kunststoffband auch vor dem Beschlag festgelegt werden. In diesem Zusammenhang ist festzuhalten, dass ein derartiges Kunststoffband auch als geschlossenes Kunststoffband ausgeführt werden kann, da insbesondere im Bereich der Trachten des Pferdes häufig auch Silikoneinlagen oder Abdeckungen aus orthopädischen Gründen angebracht sind, in welchem Fall ein derartiges Kunststoffband auch einen Abschluss nach außen zur Verfügung stellen würde.

Um ein Verrutschen des Kunststoffbandes im Bereich des Hufeisens und insbesondere ein hinauf Gleiten auf den Huf oder von dem Hufeisen hinunter mit Sicherheit hintanzuhalten, ist die Erfindung bevorzugt so weitergebildet, dass in dem Grundkörper wenigstens eine Führungsrille oder Führungsnut für das wenigstens eine elastische Kunststoffband ausgebildet ist.

Durch das Vorsehen einer Führungsrille oder Führungsnut wird ein Verrutschen des Kunststoffbandes mit Sicherheit hintangehalten und überdies wird sichergestellt, dass während des Gehens nicht beispielsweise Sand oder kleine Steine zwischen das Hufeisen und dem Kunststoffband eindringen können, welche gegebenenfalls einerseits eine übermäßige Abnützung des Kunststoffbandes mit sich bringen würden und andererseits auch zu Verletzungen des Reittieres führen könnten.

In dem, wie es einer Weiterbildung der Erfindung entspricht, das Hufeisen so ausgebildet ist, dass gegebenenfalls im Bereich der Gelenkverbindungen bestehende Unebenheiten der Hufauflageseite mit rückstellfähigen Silikon- oder Gummieinlagen verfüllt sind, wird weiterhin eine vollständig ebene Hufauflageseite zur Verfügung gestellt wodurch eine Beeinträchtigung und insbesondere ein unbeabsichtigter Druck, insbesondere punktueller Druck auf den Huf mit Sicherheit hintangehalten ist.

Hierfür kann gemäß einer bevorzugten Weiterbildung die Erfindung so ausgebildet sein, dass die Gelenkverbindungen an der Hufauflageseite mit einem Abdeckelement, insbesondere einem Leder- oder Kunststoffabdeckelement, versehen sind. Durch Vorsehen eines Abdeckelementes auf der Hufauflageseite, welches insbesondere die Gelenkverbindungen abdeckt, gelingt es einerseits einen unbeabsichtigten Druck im Bereich der Gelenkverbindungen auf den Huf des Reittieres zu vermeiden und andererseits wird eine reibungsfreie Funktion der an den Gelenken angelenkten beweglich festgelegten rückwärtigen Endteile sichergestellt. Schließlich kann mit einem derartigen Abdeckelement, insbesondere wenn es beispielsweise den gesamten Hufbereich eines Reittieres abdeckt, auch ein orthopädischer Zweck, beispielsweise durch ein Hufeisen mit einer Sililkonausschäumung des Hufes erfüllt werden.

Um eine sichere Funktionsweise der beweglich festgelegten Endteile des Hufeisens sicherzustellen und insbesondere eine reibungsfreie Bewegung dieser beweglich festgelegten Endteile auf bzw. über dem Grundkörper bzw. auf der Gleisfläche des Grundkörpers sind gemäß einer bevorzugten Weiterbildung der Erfindung entweder der Grundkörper und/oder die beweglich festgelegten Endteile mit einer Reibung verringernden Beschichtung wie eine Kupferplattierung versehen. Mit einer derartigen Ausbildung wird ein einfaches und dauerhaftes Funktionieren der beweglich festgelegten Endteile des Hufeisens gewährleistet.

Die Erfindung wird nachfolgend anhand von in der Zeichnung dargestellten Ausführungsbeispielen näher erläutert, in diesen zeigen:
Fig. 1 ein Hufeisen gemäß der Erfindung in zusammengebautem Zustand in Ansicht von oben, welches zwei Gelenkverbindungen und Blattfedern als eine Rückstellkraft ausbildende Elemente aufweist,
Fig. 2 ein Hufeisen gemäß der Erfindung in zusammengebautem Zustand in Ansicht von oben, welches zwei Gelenkverbindungen und ein um das Hufeisen herumgeführtes Kunststoffband als ein eine Rückstellkraft ausbildendes Element aufweist,
Fig. 3 eine Teilansicht eines Hufeisens gemäß Fig. 2, bei welchem das beweglich festgelegte rückwärtige Endteil in einer über die Ebene des Grundkörpers hinausragenden Stellung vorliegt,
Fig. 4. eine Teilansicht eines Hufeisens gemäß Fig. 1, bei welchem das beweglich festgelegte rückwärtige Endteil in einer über die Ebene des Grundkörpers hinausragenden Stellung vorliegt, und
Fig. 5 das Hufeisen gemäß Fig.1 in perspektivischer Ansicht von der Seite.

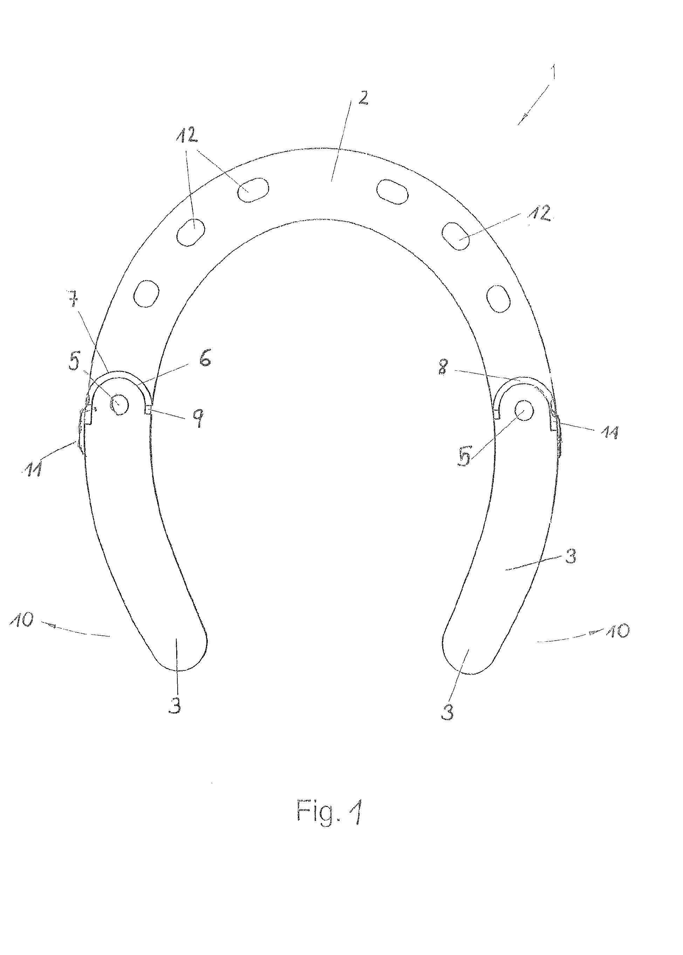

Im Einzelnen ist in Fig. 1 mit 1 ein Hufeisen gemäß der vorliegenden Erfindung bezeichnet, welches aus einem Grundkörper 2 und zwei an Endbereichen des Hufeisens 1, welche eine verringerte Dicke aufweisen, beweglich festgelegten rückwärtigen Endteilen 3 besteht. Die beweglich festgelegten rückwärtigen Endteile 3 sind hierbei jeweils mittels einer Gelenkverbindung 4 so angelenkt, dass die beweglich festgelegten rückwärtigen Endteile 3 an dem Grundkörper 2, insbesondere in den verjüngt ausgebildeten rückwärtigen Enden der Schenkel 15 des Grundkörpers 2 über einen eine Achse ausbildenden Stift 5 beweglich angeordnet sind, wobei der Stift 5 derart ausgebildet ist, dass er an dem Grundkörper 2 angeschweißt bzw. mit diesem einstückig ausgebildet ist, um die empfindliche Hufsohle bzw. den empfindlichen Hufrand eines Reittieres, beispielsweise eines Pferdes nicht durch gegebenenfalls vorstehende Teile des Stifts 5 verletzen zu können.

Nach einem Aufstecken der rückwärtigen Endteile 3 auf die Stifte 5 wird der obere freie Bereich des Stifts 5 beispielsweise breit geklopft bzw. umgebogen oder plan abgeschliffen, um einen sicheren Halt und eine zuverlässiges Funktionieren der Endteile 3 auf den Stiften 5 zu gewährleisten.

Jedes Endteil 3 weist an seinem zum Grundkörper 2 gerichteten, von den Enden der Schenkel 15 abgewandten Ende einen abgerundeten Endbereich 6 auf, welcher im Wesentlichen einer komplementären Ausnehmung 7 in dem Grundkörper 2 des Hufeisens 1 entspricht. Zwischen dem abgerundeten Endbereich 6 und der Ausnehmung 7 ist ein Spalt 8 für eine entsprechende Bewegung des Endteils 3 um den Stift 5 freigelassen. In diesen Spalt 8 kann beispielsweise ein nicht dargestelltes rückstellfähiges Silikon- oder Gummielement eingelegt sein, um einerseits die Funktion und die Bewegungsfähigkeit der Endteile 3 gegenüber dem Grundkörper 2 zu gewährleisten und andererseits ein Verschmutzen dieses Spalts 8 mit Sicherheit hintanzuhalten und somit eine Beschädigung und auch ein Funktionsunfähigmachen des gesamten Hufeisens 1 mit Sicherheit zu vermeiden.

Schließlich sind die Teile 2 bzw. 3 jeweils so ausgenommen, dass sowohl an der zur Hufinnenseite gerichteten Seite des Hufeisens 1 als auch an der zu Hufaußenseite gerichteten Seite des Hufeisens 1 jeweils ein Spalt bzw. Freiraum 9 ausgebildet ist, um die Bewegungsfähigkeit des beweglichen Endteils 3 in Bezug auf den Grundkörper 2 zu gewährleisten. Der Freiraum 9 an der zum Inneren des Hufs gerichteten Seite des Hufeisens 1 ist hierbei mit einer kleiner Abmessung ausgebildet als der Freiraum 9, welcher zur Hufaußenseite gerichtet ist, da bei der normalen Bewegung eines Reittiers insbesondere beim Auffußen des Reittiers der Huf in Richtung des Pfeils 10 aufgeweitet wird, so dass das Hufeisen 1 in Richtung des Pfeils 10 eine größere Bewegungsfreiheit als in entgegengesetzter Richtung erfordert. Um ein Verschmutzen des Freiraums 9 mit Sicherheit hintanzuhalten, kann auch in diesem Freiraum 9 wiederum ein Gummielement bzw. Kunststoffelement eingesetzt sein, welches entsprechend nachgiebig ausgebildet ist.

Um nach einem Aufweiten der beweglichen Endteile 3 diese wieder in eine mit dem Grundkörper 2 deckungsgleiche Position zu bringen, ist gemäß einer bevorzugten Ausbildung der Erfindung jeweils an der Außenseite des Hufeisens 1 im Bereich der Gelenkverbindung 4 zwischen Grundkörper 2 und jedem beweglichen Endteil 3 eine Blattfeder 11 vorgesehen. Die Blattfeder 11 ist hierbei an den beweglichen Endteilen 3 festgelegt und an der Innenseite des Grundkörpers 2 in einer dafür vorgesehenen Ausnehmung insbesondere einem Sackloch, welches in der Zeichnung nicht dargestellt ist, gehalten. Die Blattfeder 11 ist hierbei so eingesetzt, dass sie eine Rückstellkraft auf das zughörige bewegliche Endteil 3 ausübt, um es nachdem es durch das Auffußen des Reittierhufes in Richtung des Pfeils 10 verschwenkt wurde, wiederum in eine mit dem Grundkörper 2 deckungsgleiche Position zurückzuführen. Anstelle einer Blattfeder 11 kann auch eine Spiralfeder eingesetzt sein, welche gegebenenfalls auch etwas verschieden von einer Blattfeder 11 angelenkt sein kann. Sowohl die Blattfeder 11 als auch gegebenenfalls eine Spiralfeder können in dafür vorgesehene Nuten in dem Grundkörper 2 als auch dem beweglichen Endteil 3 des Hufeisens 1 versenkt sein.

Schließlich weist das Hufeisen 1 in seinem Grundkörper 2, insbesondere in jenem Bereich des Grundkörpers 2, welcher keine beweglich festgelegten Endteile 3 aufweist, Nagellöcher 12 auf, die für eine Festlegung auf einem nicht dargestellten Pferdehuf erforderlich sind. Die Nagellöcher 12 können weiterhin voneinander verschiedene Neigungen zur Ebene des Hufeisens 1 aufweisen, um der Anatomie des Hufes zu genügen. So können beispielsweise die im Bereich der Zehe des Reittieres einen Winkel bis zu 30° aufweisen und werden im Bereich zu den Trachten nahezu senkrecht zur Ebene des Hufeisens 1. Auch können die Neigungen bei Hufeisen 1 für einen Vorderhuf unterschiedlich von jenen für einen Hinterhuf sein. Weitere Elemente des Hufeisens 1, welche entweder zwingend vorhanden sind oder fakultativ daran festgelegt oder ausgebildet werden können, wie Aufzüge, Ausnehmungen für Stollen oder auch spezielle Abschrägungen in der Lauffläche des Hufeisens sind, da sie für ein Funktionieren der vorliegenden Erfindung nicht wesentlich sind, nicht dargestellt.

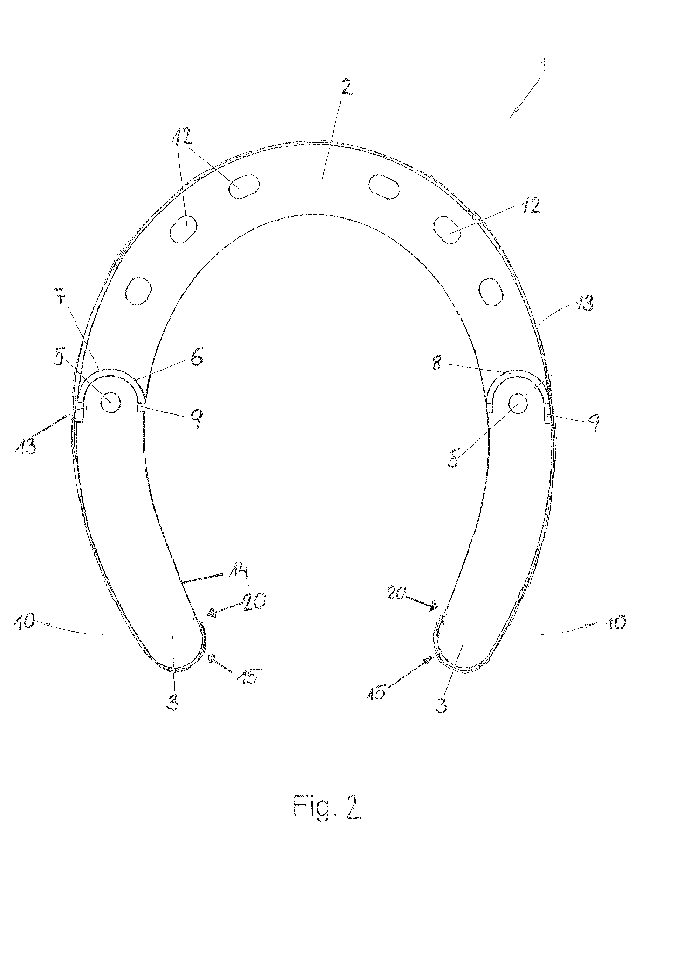

Bei der Darstellung gemäß Fig. 2 sind die Bezugszeichen von Fig. 1 so weit wie möglich beibehalten. In Fig. 2 ist ein. Hufeisen 1 in zusammengebautem Zustand in Ansicht von oben dargestellt, welches zwei beweglich festgelegte Endteile 3 und ein um das Hufeisen 1 herumgeführtes Kunststoffband 13 als ein eine Rückstellkraft ausbildendes Element aufweist. Das Kunststoffband 13 ist hierbei an der Innenseite 14 des Hufeisens 1, insbesondere im Bereich der freien Schenkel 15 des Hufeisens 1, beispielsweise in dafür vorgesehenen Schlitzen 20 in dem Grundkörper 2, insbesondere lösbar festgelegt.

Anstelle der Festlegung des Kunststoffbandes 13 an den freien Schenkeln 15 des Grundkörpers 2 kann das Kunststoffband 13 auch als in sich geschlossenes Element ausgebildet sein, welches zur Gänze um das Hufeisen 1 herumgeführt ist. In diesem Fall können mit dem Kunststoffband 13 beispielsweise auch orthopädische Einlagen im Inneren des Hufeisens 1 gehalten werden. Eine weitere Möglichkeit die beweglichen Endteile 3 mit dem Kunststoffband 13 rückzustellen ist weiterhin, dass ein entsprechend starkes und straff gespanntes Kunststoffband 13 in gleicher Weise, wie die in Fig. 1 beschriebene Blattfeder 11 ausgebildet wird.

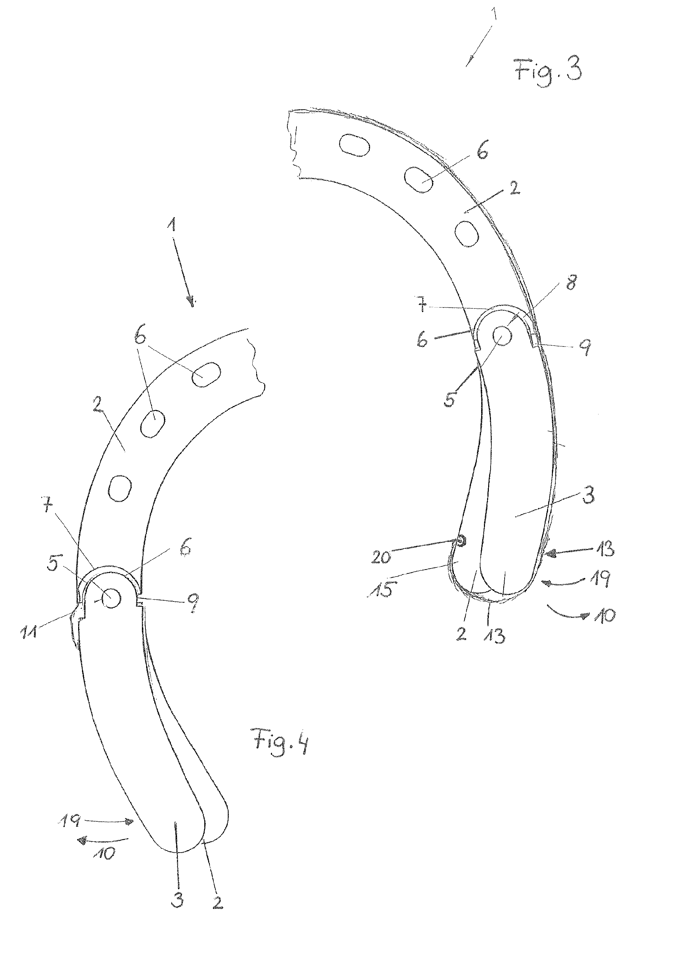

Bei der Darstellung gemäß Fig. 3, welche eine Teilansicht eines Hufeisens 1 gemäß Fig. 2 ist, ist das beweglich festgelegte rückwärtige Endteil 3 in einer über die Ebene des Grundkörpers 2 hinausragender Stellung dargestellt, wobei die Bezugszeichen von Fig. 2 beibehalten sind. Durch die Verschwenkung des beweglichen Endteils 3 in Richtung nach Außen bzw. in Richtung des Pfeils 10 bei einem Auffußen des Reittieres wird das Kunststoffband 13 gedehnt und wenn das Reittier sein Bein wiederum anhebt wird durch die Rückstellkraft des Kunststoffbandes 13 das bewegliche Endteil 3 in Richtung des Pfeils 19 beaufschlagt und wiederum in seine Grundstellung, welche das bewegliche Endteil 3 direkt den Grundkörper 2 überdeckend angeordnet ist, zurückgeführt.

In Fig. 3 ist weiterhin ersichtlich, dass das Kunststoffband 13 an der Innenseite 14 des Grundkörpers 2 in einer dafür ausgebildeten Ausnehmung 20, insbesondere einem Schlitz oder einem Sackloch festgelegt ist. Die Festlegung des Endteils des Kunststoffbandes 13 kann hierbei auf jede beliebige und technisch machbare Weise erfolgen und umfasst beispielsweise eine reibschlüssige Festlegung, eine Festlegung in einem sich nach Innen erweiternden Schlitz mittels eines verdickten Endes des Kunststoffbandes 13 und dgl.

Bei der Darstellung gemäß Fig. 4, welche eine Teilansicht eines Hufeisens 1 gemäß Fig. 1 ist, ist das beweglich festgelegte rückwärtige Endteil 3 in einer über die Ebene des Grundkörpers 2 hinausragenden Stellung dargestellt, wobei die Bezugszeichen von Fig. 1 beibehalten sind. Durch die Verschwenkung des beweglichen Endteils 3 in Richtung nach Außen durch bzw. in Richtung des Pfeils 10 durch das Auffußen des Reittierhufes bei einem Auffußen des Reittieres wird die Blattfeder 11 gespannt und wenn das Reittier sein Bein wiederum anhebt wird durch die Rückstellkraft der Blattfeder 11 bewegliche Endteil 3 in Richtung des Pfeils 19 beaufschlagt und wiederum in seine Grundstellung, welche das bewegliche Endteil 3 direkt den Grundkörper 2 überdeckend angeordnet ist, zurückgeführt. Um die Bewegungen des beweglichen Endteils 3 den Erfordernissen eines ausreichenden Gleitens und gleichzeitig eines ausreichenden Haltens zu gewährleisten, kann das bewegliche Endteil 3 auch wenigstens eine aufgeraute Oberfläche, insbesondere auf der Seite zum Pferdehuf aufweisen.

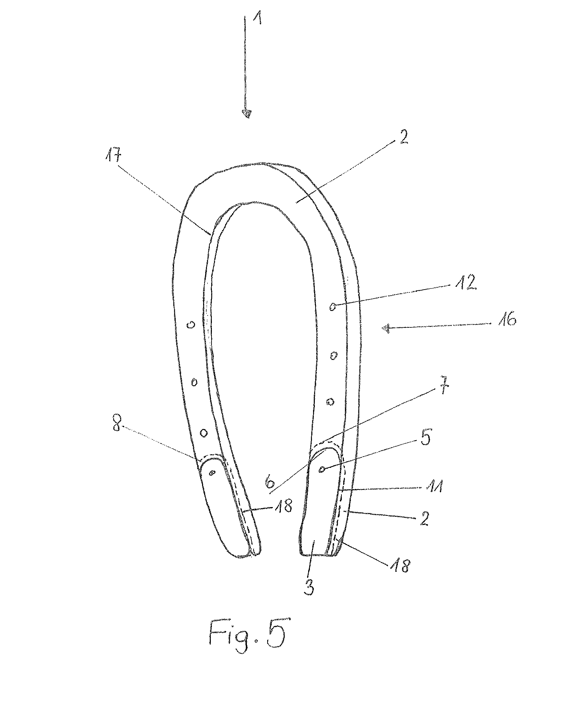

In Fig. 5 ist das Hufeisen 1 von Fig. 1 in einer perspektivischen Ansicht von der Seite dargestellt. In dieser Fig. ist insbesondere zu erkennen, dass der Grundkörper 2 die gesamte Lauffläche 16 ausbildet und dass die beweglichen Endteile 3 an abgesetzten Bereichen insbesondere an Bereichen verringerter Höhe des Grundkörpers 2 angeordnet sind, so dass das Hufeisen 1 auch an der einem Reittierhuf zugewandten Hufauflageseite 17 durchgehend eine gleichmäßige Dicke aufweist. Schließlich ist zwischen den beweglichen Endteilen 3 und dem Grundkörper 2 eine schematisch angedeutete Gleitfläche 18, welche aus einem Material mit einem verringerten Reibungskoeffizienten gebildet ist, angeordnet, um eine sichere und zuverlässige Funktion der beweglichen Endteile 3 auch nach einem längeren Gebrauch des Hufeisens 1 zu gewährleisten.

Es ist für einen Fachmann offensichtlich, dass ein derartiges Hufeisen sowohl für einen kalten Beschlag als auch für den Heißbeschlag einsetzbar ist, wobei im Falle des Einsatzes einer des eine Rückstellkraft ausübenden Elements aus Metall keinerlei gesonderten Vorsichtsmaßnahmen zu beachten sind. Wenn es gewünscht ist, ein Kunststoffband 13 als ein eine Rückstellkraft ausübendes Element an dem Hufeisen 1 anzuwenden, wird bevorzugt so vorgegangen, dass bei der Bearbeitung des Hufeisens 1, insbesondere der Heißbearbeitung desselben, das Kunststoffband 13 erst nach einer Bearbeitung angeordnet wird, weshalb beispielsweise auch beliebige, insbesondere in der Dicke und Elastizität verschiedene Kunststoffbänder 13 gewählt werden können.

Selbstverständlich kann das Hufeisen 1 auch derart ausgebildet werden, dass ein vollständig aus Kunststoff ausgebildetes Hufeisen 1 zum Einsatz gelangt. Weiters kann statt eines genagelten Hufeisens 1 selbstverständlich auch jedes geklebte Hufeisen 1 mit der erfindungsgemäßen Gelenkverbindung 4 zum Einsatz gelangen, wobei dann darauf zu achten ist, dass im Bereich der beweglichen Endteile 3 keinerlei Klebung vorhanden sein darf.

## Patentansprüche

1. Hufeisen (1), für Reittierhufe mit einem hufeisenförmigen, eine Laufseite (16) und eine Hufauflageseite (17) aufweisenden Grundkörper (2) sowie gegebenenfalls wenigstens einen an dem Grundkörper (2) festgelegten Aufzug und zwei an dem Grundkörper (2) über Gelenkverbindungen (4) beweglich festgelegte rückwärtige Endteile (3) des Hufeisens (1), wobei der Grundkörper (2) die Laufseite (16) des Hufeisens (1) ausbildet und die beweglich festgelegten Endteile (3) Teile der Hufauflageseite (17) ausbilden, wobei die Gelenkverbindungen (4) in der Ebene der Hufauflageseite (17) des Hufeisens (1) relativ zueinander beweglich sind, **dadurch gekennzeichnet, dass** die Gelenkverbindungen (4) an einer Außenseite des Hufeisens (1) von einem eine Rückstellkraft auf die beweglichen Endteile (3) ausübenden Element (11, 13) übergriffen sind.

2. Hufeisen nach Anspruch 1, **dadurch gekennzeichnet, dass** die eine Rückstellkraft ausübenden Elemente (11, 13) aus Federelementen oder Dämpfungselementen gewählt sind.

3. Hufeisen nach Anspruch 1 oder 2, **dadurch gekennzeichnet, dass** die eine Rückstellkraft ausübenden Elemente (11, 13) als Blattfedern (11) ausgebildet sind.

4. Hufeisen nach Anspruch 3, **dadurch gekennzeichnet, dass** die Blattfedern (11) mit wenigstens dem Grundkörper (2) und/oder den beweglich festgelegten Endteilen (3) lösbar verbunden sind.

5. Hufeisen nach einem der Ansprüche 3 oder 4, **dadurch gekennzeichnet, dass** die Blattfedern in zumindest im Grundkörper (2) ausgebildeten Sacklöchern lösbar festlegbar sind.

6. Hufeisen nach einem der Ansprüche 3 oder 4, **dadurch gekennzeichnet, dass** die Blattfedern (11) mit den beweglich festgelegten rückwärtigen Endteilen (3) unlösbar verbunden sind.

7. Hufeisen nach einem der Ansprüche 1, 2 oder 3, **dadurch gekennzeichnet, dass** das Hufeisen (1) an seiner Außenseite wenigstens teilweise von wenigstens einem eine Rückstellkraft ausübenden elastischen Kunststoffband (13) umgeben ist.

8. Hufeisen nach Anspruch 7, **dadurch gekennzeichnet, dass** Enden des wenigstens einen elastischen Kunststoffbandes (13) in Ausnehmungen (20), insbesondere an der Innenseite (14) des Hufeisens (1) festgelegt, insbesondere eingehakt sind.

9. Hufeisen nach Anspruch 7 oder 8, **dadurch gekennzeichnet, dass** in dem Grundkörper (2) wenigstens eine Führungsrille für das wenigstens eine elastische Kunststoffband (13) ausgebildet ist.

10. Hufeisen nach einem der Ansprüche 1 bis 9, **dadurch gekennzeichnet, dass** die eine Rückstellkraft ausbildenden Elemente (11, 13) die beweglich festgelegten Endteile (3) des Hufeisens (1) in an sich bekannter Weise in Richtung zu einer Hufinnenseite (14) beaufschlagen.

11. Hufeisen nach einem der Ansprüche 1 bis 10, **dadurch gekennzeichnet, dass** gegebenenfalls im Bereich der Gelenkverbindungen (4) bestehende Unebenheiten der Hufauflageseite (17) mit rückstellfähigen Silikon- oder Gummieinlagen verfüllt sind.

12. Hufeisen nach einem der Ansprüche 1 bis 11, **dadurch gekennzeichnet, dass** die Gelenkverbindungen (4) an der Hufauflageseite (17) mit einem Abdeckelement, insbesondere Leder- oder Kunststoffabdeckelement, versehen sind.

13. Hufeisen nach einem der Ansprüche 1 bis 12, **dadurch gekennzeichnet, dass** Gleitflächen (18) der beweglich festgelegten Endteile (3) und/oder Gleitflächen des Grundkörpers (2) im Bereich der beweglich festgelegten Endteile (3) mit einer Reibung verringernden Beschichtung, wie einer Kupferplattierung versehen sind.

## Claims

1. A horseshoe (1) for the hooves of riding animals, comprising a horseshoe-shaped base body (2) having a running side (16) and a hoof application side (17), and optionally at least one upstand fixed to the base body (2), and two rear end parts (3) of the horseshoe (1), which are movably fixed to the base body (2) via joint connections (4), the base body (2) forming the running side (16) of the horseshoe (1) and the movably fixed end parts (3) forming parts of the hoof application side (17), whereby the joint connections (4) are movable relative to each other in the plane of the hoof application side (17) of the horseshoe (1), **characterized in that** the joint connections (4) are each overlapped on an outer side of the horseshoe (1) by an element (11, 13) exerting a restoring force onto the movable end parts (3).

2. A horseshoe according to claim 1, **characterized in that** the elements (11, 13) exerting a restoring force are selected from spring elements or damping elements.

3. A horseshoe according to claim 1 or 2, **characterized in that** the elements (11, 13) exerting a restoring force are designed as leaf springs (11).

4. A horseshoe according to claim 3, **characterized in that** the leaf springs (11) are detachably connected to at least the base body (2) and/or the movably fixed end parts (3).

5. A horseshoe according to any one of claims 2, 3 or 4, **characterized in that** the leaf springs are detachably fixable in blind holes formed in at least the base body (2).

6. A horseshoe according to any one of claims 2, 3 or 4, **characterized in that** the leaf springs (11) are non-detachably connected to the movably fixed, rear end parts (3).

7. A horseshoe according to any one of claims 1, 2 or 3, **characterized in that** the horseshoe (1), on its outer side, is at least partially surrounded by at least one elastic plastic strip (13) exerting a restoring force.

8. A horseshoe according to claim 7, **characterized in that** the ends of the at least one elastic plastic strip (13) are fixed, in particular hooked, in recesses (20) provided, in particular, on the inner side (14) of the horseshoe (1).

9. A horseshoe according to claim 7 or 8, **characterized in that** at least one guide channel is formed in the base body (2) for the at least one elastic plastic strip (13).

10. A horseshoe according to any one of claims 1 to 9, **characterized in that** the elements (11, 13) exerting a restoring force in a manner known per se act on the movably fixed end parts (3) of the horseshoe (1) in the direction to an inner side (14) of the horseshoe.

11. A horseshoe according to any one of claims 1 to 10, **characterized in that** irregularities of the hoof application side (17) possibly existing in the region of the joint connections (4) are filled with resilient silicone or rubber inserts.

12. A horseshoe according to any one of claims 1 to 11, **characterized in that** the joint connections (4) on the hoof application side (17) are each provided with a cover element, in particular a leather or plastic cover element.

13. A horseshoe according to any one of claims 1 to 12, **characterized in that** slide surfaces (18) of the movably fixed end parts (3), and/or slide surfaces of the base body (2) in the region of the movably fixed end parts, are provided with a friction-reducing coating such as a copper plating.

## Revendications

1. Fer à cheval (1) pour les sabots d'une monture, comprenant un corps de base (2) en forme de fer à cheval présentant une face de contact avec le sol (16) et une face d'appui du sabot (17), ainsi qu'éventuellement au moins un poinçon fixé au niveau du corps de base (2) et deux parties terminales (3) arrière fixées de manière mobile au niveau du corps de base (2) par l'intermédiaire de liaisons articulées (4), du fer à cheval (1), dans lequel le corps de base (2) réalise la face de contact avec le sol (16) du fer à cheval (1) et les parties terminales (3) fixées de manière mobile réalisent des parties de la face d'appui de sabot (17), dans lequel
les liaisons articulées (4) sont mobiles les unes par rapport aux autres dans le plan de la face d'appui de sabot (17) du fer à cheval (1), **caractérisé en ce**
**que** les liaisons articulées (4) sont couvertes au niveau d'une face extérieure du fer à cheval (1) par un élément (11, 13) exerçant une force de rappel sur les parties terminales (3) mobiles.

2. Fer à cheval selon la revendication 1, **caractérisé en ce que** les éléments (11, 13) exerçant une force de rappel sont choisis parmi des éléments à ressorts ou des éléments amortisseurs.

3. Fer à cheval selon la revendication 1 ou 2, **caractérisé en ce que** les éléments (11, 13) exerçant une force de rappel sont réalisés sous la forme de ressorts à lames (11).

4. Fer à cheval selon la revendication 3, **caractérisé en ce que** les ressorts à lames (11) sont reliés de manière amovible au moins au corps de base (2) et/ou aux parties terminales (3) fixées de manière mobile.

5. Fer à cheval selon l'une quelconque des revendications 3 ou 4, **caractérisé en ce que** les ressorts à lames peuvent être fixés de manière amovible dans au moins des trous borgnes réalisés dans le corps de base (2).

6. Fer à cheval selon l'une quelconque des revendications 3 ou 4, **caractérisé en ce que** les ressorts à lames (11) sont reliés de manière inamovible aux parties terminales (3) arrière fixées de manière mobile.

7. Fer à cheval selon l'une quelconque des revendications 1, 2 ou 3, **caractérisé en ce que** le fer à cheval (1) est entouré au niveau d'une face extérieure au moins en partie par au moins une bande de plastique (13) élastique exerçant une force de rappel.

8. Fer à cheval selon la revendication 7, **caractérisé en ce que** des extrémités de l'au moins une bande en plastique (13) élastique sont fixées, en particulier sont accrochées dans des évidements (20), en particulier au niveau de la face intérieure (14) du fer à cheval (1).

9. Fer à cheval selon la revendication 7 ou 8, **caractérisé en ce qu'**au moins une rainure de guidage pour l'au moins une bande en plastique (13) élastique est réalisée dans le corps de base (2).

10. Fer à cheval selon l'une quelconque des revendications 1 à 9, **caractérisé en ce que** les éléments (11, 13) réalisant une force de rappel contraignent les parties terminales (3) fixées de manière mobile du fer à cheval (1) d'une manière connue en soi en direction d'une face intérieure de sabot (14).

11. Fer à cheval selon l'une quelconque des revendications 1 à 10, **caractérisé en ce que** des irrégularités existant éventuellement dans la zone des liaisons articulées (4), de la face d'appui de sabot (17) sont remplies de garnitures de silicone ou de caoutchouc repositionnables.

12. Fer à cheval selon l'une quelconque des revendications 1 à 11, **caractérisé en ce que** les liaisons articulées (4) au niveau de la face d'appui de sabot (17) sont pourvues d'un élément de recouvrement, en particulier d'un élément de recouvrement en cuir ou en plastique.

13. Fer à cheval selon l'une quelconque des revendications 1 à 12, **caractérisé en ce que** des faces de glissement (18) des parties terminales (3) fixées de manière mobile et/ou des surfaces de glissement du corps de base (2) sont pourvues, dans la zone des parties terminales (3) fixées de manière mobile, d'un revêtement réduisant la friction, tel qu'un placage de cuivre.
